# EUROPEAN PATENT SPECIFICATION

(11) **EP 4 497 968 B1**
(45) Date of publication and mention of the grant of the patent: **11.11.2026**
(21) Application number: 24166485.3
(22) Date of filing: 26.03.2024
(51) Int. Cl.: F16H 1/20, F16H 57/027, F16H 57/04

(54) **SPEED REDUCER, POWERTRAIN, AND VEHICLE**
UNTERSETZUNGSGETRIEBE, ANTRIEBSSTRANG UND FAHRZEUG
RÉDUCTEUR DE VITESSE, GROUPE MOTOPROPULSEUR ET VÉHICULE

(30) Priority: 27.07.2023 CN 202310936586
(43) Date of publication of application: 29.01.2025
(73) Proprietor: Xiaomi EV Technology Co., Ltd., Beijing 100176 (CN)
(72) Inventor: YUAN, Feng, Beijing, 100176 (CN); XIE, Lier, Beijing, 100176 (CN)
(74) Representative: Hersina, Günter

(56) References cited:
- EP-A1- 2 602 515
- CN-A- 112 780 757
- CN-A- 115 076 347
- DE-A1- 102010 047 515
- US-B2- 10 746 282

## Description

### FIELD

The present invention relates to the field of vehicles, and more particularly to a speed reducer, a powertrain, and a vehicle.

### BACKGROUND

With the continuous development of new energy vehicles and the gradual improvement of market demand for drive capacity of the new energy vehicles, drive motors of the new energy vehicles continues to be improved in terms of speed, torque density and power density.

EP 2 602 515 A1 relates to a power transmission device. The oil reservoir is divided in a first oil reservoir and a second oil reservoir. The first oil reservoir accommodates the final gear, the oil agitation of which causing bubbles. The second oil reservoir does not accommodate the final gear and thus has no bubbles. The oil pump draws oil from the second oil reservoir without bubbles. Thus, pump cavitation failure is prevented.

### SUMMARY

The present invention is intended to solve at least one of the problems existing in the related art to at least some extent. Accordingly, embodiments of the present invention propose a speed reducer, which can avoid the loss of lubricating oil and enhance lubrication stability.

The invention is set out in the appended set of claims.

### BRIEF DESCRIPTION OF THE DRAWINGS

FIG. 1 is a structural schematic diagram of a speed reducer according to an embodiment of the present invention.
FIG. 2 is a front view of a speed reducer according to an embodiment of the present invention.
FIG. 3 is a rear view of a speed reducer according to an embodiment of the present invention.

### References signs:

housing 1; chamber 101; gear chamber 111; oil chamber 112; oil collection chamber 113;
partition plate 2; oil discharge port 21;
input component 3; input shaft 31; input bearing 32; input gear 33;
transmission component 4; transmission shaft 41; first transmission gear 42; transmission bearing 43; second transmission gear 44;
output component 5; output shaft 51; output gear 52; output bearing 53;
oil scavenge pump 6; ventilation plug 7; main oil passage 8; first branch 9; second branch 10; third branch 11; fourth branch 12; fifth branch 13.

### DETAILED DESCRIPTION

Embodiments of the present invention are described in detail below, examples of which are shown in the accompanying drawings. The following embodiments described with reference to the accompanying drawing are illustrative. It should be understood that the embodiments described are intended to explain the present invention, but not to limit the present invention.

In the related art, speed reducer systems face a higher challenge, with more lubrication and cooling requirements for bearings and gears. Speed reducers in the related art adopt a splash lubrication method, which utilizes the gear to stir lubricating oil at a high speed in an oil sump of the speed reducers and drives the oil to splash inside a speed reducer to lubricate the gear. However, the splash lubrication method requires the lubricating oil to reach a certain level for immersion of the gear such that the lubricating oil may be ejected, which requires a large total amount of lubricating oil. Furthermore, when a vehicle encounters uphill and downhill and is under conditions of acceleration and deceleration, a level of the lubricating oil is uncontrollable, which is prone to causing a large churning loss, unstable lubrication and so on.

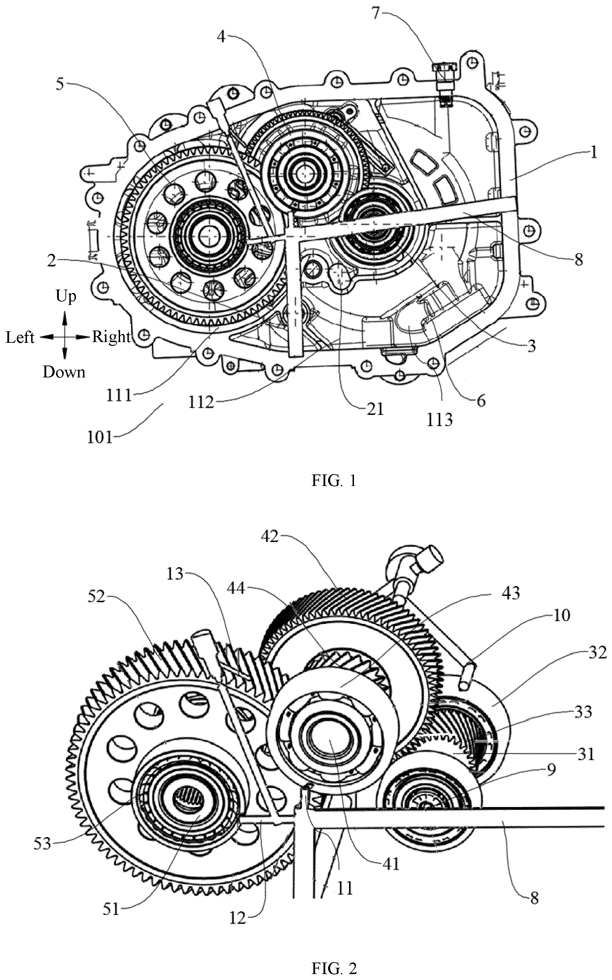

As illustrated in FIGS. 1 to 3, a speed reducer according to embodiments of the present invention includes a housing 1, a partition plate 2, and a reduction assembly. The housing 1 defines a chamber 101 and an oil passage. The partition plate 2 is arranged in the housing 1 to separate the chamber 101 into a gear chamber 111 and an oil chamber 112. The reduction assembly is arranged in the gear chamber 111. The oil passage has an inlet in communication with the oil chamber 112 and an outlet in communication with the gear chamber 111, and the outlet of the oil passage faces towards the reduction assembly to lubricate the reduction assembly.

Specifically, as illustrated in FIGS. 1 and 2, the partition plate 2 is arranged in the housing 1, the partition plate 2 separates the chamber 101 inside the housing 1 into the gear chamber 111 and the oil chamber 112, the gear chamber 111 is located above the oil chamber 112, and the oil passage is defined in the housing 1. It should be noted that the housing 1 includes two detachable sub-housings 1, each of the two sub-housings 1 defines a groove, and the grooves in the two sub-housings 1 enclose the oil passage. The inlet of the oil passage is in communication with the oil chamber 112, and the outlet of the oil passage faces towards the reduction assembly and sprays lubricating oil to the reduction assembly through the oil passage.

The speed reducer according to embodiments of the present invention uses the partition plate 2 to separate an interior of the housing 1 into the gear chamber 111 and the oil chamber 112 independent of each other, thereby avoiding the loss of lubricating oil due to splash lubrication and ensuring the suction stability of an oil pump; and uses the oil passage to spray the lubricating oil to the reduction assembly, changing a passive lubrication method of splash lubrication to an active lubrication, which improves the lubrication performance of the reduction assembly and enhances lubrication stability. Moreover, due to separation of the oil chamber 112 and the gear chamber 111, the lubricating oil can still be delivered to the reduction assembly through the oil passage when a vehicle is moving uphill and downhill or tilting left and right.

According to the present invention, the reduction assembly includes an input component 3, a transmission component 4 and an output component 5. The input component 3, the transmission component 4, and the output component 5 are arranged at intervals in a length direction of the housing 1. The oil passage includes a main oil passage 8 and a plurality of branch oil passages, the plurality of branch oil passages has inlets in communication with the main oil passage 8 and outlets respectively facing towards the input component 3, the transmission component 4 and the output component 5 to deliver the lubricating oil to the reduction assembly.

Specifically, as illustrated in FIG. 1, the input component 3, the transmission component 4, and the output component 5 are arranged sequentially from right to left, a power input end of the input component 3 is connected to a power source, and a power output end of the output component 5 is connected to a drive shaft. The outlets of the plurality of branch oil passages face towards the input component 3, the transmission part 4 and the output component 5, respectively. It should be noted that, the branch oil passages can have different oil discharge capacities. For example, the outlets of the branch oil passages define flow limiting holes, and a size of the flow limiting hole of each branch oil passage can be different. For example, suitable size of the flow limiting hole is selected according to calibration of the input component 3, the transmission component 4 and the output component 5. By arranging the plurality of branch oil passages, the amount of oil sprayed on each component of the reduction assembly can be adjusted according to the operating condition of the vehicle and speed reducer performance calibration, which can not only improve the utilization rate of lubricating oil, but also enable the speed reducer to operate in an optimal lubrication and efficiency range.

In some embodiments, the reduction assembly includes the input component 3, the input component 3 includes an input shaft 31 and two input bearings 32, the two input bearings 32 are sleeved on the input shaft 31, and the two input bearings 32 are respectively located at two ends of the input shaft 31. The branch oil passages include a first branch 9, and the first branch 9 has an outlet facing towards the two input bearings 32.

Specifically, as illustrated in FIG. 1, the two input bearings 32 are located on a front side and a rear side of the input shaft 31, respectively. The first branch 9 located on the front side sprays the lubricating oil to the input bearing 32 on the front side, while the first branch 9 located on the rear side sprays the lubricating oil to the input bearing 32 on the rear side, and the lubricating oil can be sprayed onto the input bearings 32 on the front side and the rear side of the input shaft 31 through the first branches 9, which can improve the lubrication of the bearings on a power input side. It should be noted that the sizes of the flow limiting holes of the first branches 9 on the front side and the rear side can be the same or different. For example, the sizes of the flow limiting holes on the front side and the rear side can be adjusted according to a calibration parameter of the input bearings 32 on the front and rear sides or the operating condition of the vehicle, which can not only finely control the amount of lubricating oil to improve the use efficiency of lubricating oil, but also improve the performance of the speed reducer.

In some embodiments, the transmission component 4 includes a transmission shaft 41, a first transmission gear 42, and two transmission bearings 43. The two transmission bearings 43 and the first transmission gear 42 are sleeved on the transmission shaft 41, the two transmission bearings 43 are respectively located at two ends of the transmission shaft 41, and the first transmission gear 42 is located between the two transmission bearings 43. The input component 3 includes an input gear 33, and the input gear 33 is engaged with the first transmission gear 42. The branch oil passages further include a second branch 10 and a third branch 11, the second branch 10 has an outlet facing towards the input gear 33, and the third branch 11 has an outlet facing towards the two transmission bearings 43.

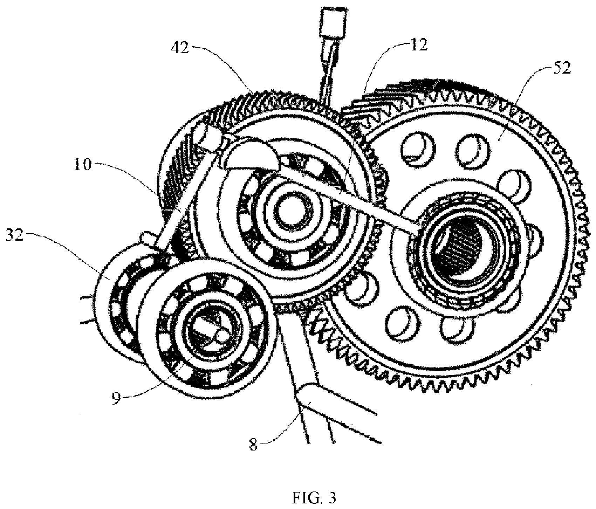

Specifically, as illustrated in FIGS. 2 and 3, the transmission shaft 41 and the input shaft 31 are arranged at intervals in a left-right direction, and the transmission shaft 41 and the input shaft 31 are arranged in parallel. The two transmission bearings 43 are arranged opposite in a front-rear direction of the transmission shaft 41, the first transmission gear 42 is located between the two transmission bearings 43, and the first transmission gear 42 is engaged with the input gear 33. The outlet of the second branch 10 faces towards the input gear 33, the outlet of the third branch 11 on the front side sprays the lubricating oil towards the transmission bearing 43 on the front side, while the outlet of the third branch 11 on the rear side sprays the lubricating oil towards the transmission bearing 43 on the rear side. Through the second branch 10, a first stage gear, namely the first transmission gear 42 and the input gear 33, is lubricated, improving operational stability and service life of the speed reducer.

It should be noted that the sizes of the flow limiting holes of the third branches 11 on the front side and the rear side can be the same or different. For example, the sizes of the flow limiting holes on the front side and the rear side can be adjusted according to a calibration parameter of the transmission bearings 43 on the front and rear sides or the operating condition of the vehicle, which can not only finely control the amount of lubricating oil to improve the use efficiency of lubricating oil, but also improve the performance of the speed reducer.

In some embodiments, the output component 5 includes an output shaft 51, an output gear 52, and two output bearings 53. The two output bearings 53 and the output gear 52 are sleeved on the output shaft 51, the two output bearings 53 are respectively located at two ends of the output shaft 51, and the output gear 52 is located between the two output bearings 53. The transmission component 4 further includes a second transmission gear 44, and the output gear 52 is engaged with the second transmission gear 44. The branch oil passages further include a fourth branch 12 and a fifth branch 13, the fourth branch 12 has an outlet facing towards the two output bearings 53, and the fifth branch 13 has an outlet facing towards the output gear 53.

Specifically, as illustrated in FIGS. 2 and 3, the transmission shaft 41 and the output shaft 51 are arranged at intervals in the left-right direction, and the transmission shaft 41 and the output shaft 51 are arranged in parallel. The two output bearings 53 are arranged opposite in a front-rear direction of the output shaft 51, the second transmission gear 44 and the first transmission gear 42 are arranged at intervals in an axial direction of the transmission shaft 41, the second transmission gear 44 is engaged with the output gear 52, and the outlet of the fifth branch 13 faces towards the output gear 52. Thus, a second stage gear, namely the second transmission gear 44 and the output gear 52, is lubricated.

The outlet of the fourth branch 12 on the front side sprays the lubricating oil towards the output bearing 53 on the front side, while the outlet of the fourth branch 12 on the rear side sprays the lubricating oil towards the output bearing 53 on the rear side.

It should be noted that the sizes of the flow limiting holes of the fourth branches 12 on the front side and the rear side can be the same or different. For example, the sizes of the flow limiting holes on the front side and the rear side can be adjusted according to an calibration parameter of the output bearings 53 on the front and rear sides or the operating condition of the vehicle, which can not only finely control the amount of lubricating oil to improve the efficiency of lubricating oil use, but also improve the performance of the speed reducer.

Optionally, there is a preset distance between the partition plate 2 on a left side and the output gear 52, which not only ensures rotation smoothness of the output gear 52, but also reduces the amount of oil stirred by the output gear 52.

According to the present invention, the speed reducer further includes an oil scavenge pump 6. The oil scavenge pump 6 is arranged in the oil chamber 112, the partition plate 2 defines an oil discharge port 21, and the housing 1 further defines an oil collection chamber 113. The oil collection chamber 113 has an inlet in communication with the oil discharge port 21 and an outlet in communication with the oil scavenge pump 6.

Specifically, as illustrated in FIG. 1, the oil discharge port 21 is in communication with the oil collection chamber 113, the oil scavenge pump 6 is located in the oil chamber 112, and the oil scavenge pump 6 sucks the lubricating oil from the oil collection chamber 113 into the oil chamber 112, achieving recovery of lubricating oil inside the gear chamber 111 and improving the use efficiency of lubricating oil.

The lubricating oil on a right side of the output gear 52 is discharged through the oil discharge port 21.

As illustrated in FIG. 1, a height of the partition plate 2 on a right side is higher than a height of the oil discharge port 21, while a height of the partition plate 2 on the left side is lower than the height of the oil discharge port 21. Therefore, a sufficiently high oil difference between the partition plate 2 on the right side and the output gear 52 cannot be established, thereby reducing the amount of oil stirred by the gear. Furthermore, the lubricating oil on the right side flows into the oil discharge port 21 under the action of gravity, and the amount of oil stirred by the input gear 33 and the transmission gear is reduce, reducing the churning loss of the speed reducer.

In some embodiments, the speed reducer further includes an oil supply pump, an oil cooler and a filter connected in sequence, and the oil supply pump has an outlet in communication with the main oil passage 8 and an inlet in communication with the oil chamber 112.

It should be noted that the inlet of the oil supply pump is in communication with the oil chamber 112, the outlet of the oil supply pump is in communication with an inlet of the oil cooler, an outlet of the oil cooler is in communication with an inlet of the filter, and an outlet of the filter is in communication with the main oil passage 8. The lubricating oil can be cleaner by passing through the oil cooler and the filter, and the temperature of the lubricating oil can be adjusted, improving the lubrication effect on the gears and the bearings and the service life and performance of the speed reducer.

Furthermore, due to the presence of the partition plate 2, the evacuation rate of the oil supply pump can be reduced, and the NVH performance and reliability of the oil supply pump can be improved.

In some embodiments, the speed reducer further includes a ventilation plug 7. The ventilation plug 7 is connected to the housing 1, the ventilation plug 7 is located in the oil chamber 112, and the ventilation plug 7 has an installation height greater than a liquid level height inside the oil chamber 112.

Specifically, as illustrated in FIG. 1, the ventilation plug 7 is located above the oil chamber 112, and a lower end of the ventilation plug 7 extends into the oil chamber 112. It should be noted that the ventilation plug 7 is located at a highest point of the oil chamber 112. For example, to ensure IP67/69K protection capability, the ventilation plug 7 adopts a normally closed breathable film ventilation plug. Due to non-oil resistance of a breathable film of the ventilation plug 7, the ventilation plug 7 will be blocked when the lubricating oil covers the breathable film. When the vehicle is driving at a high speed, the partition plate 2 is used to separate the gear chamber 111 and the oil chamber 112, which can prevent the splashing lubricating oil from impacting the ventilation plug 7, to avoid ventilation oil leakage or blockage of the ventilation plug 7 by an oil film caused by the vehicle under intense and complex driving conditions or causing, and to effectively prolong the service life of the ventilation plug 7.

A powertrain according to embodiments of the present invention includes a speed reducer according to the appended claims.

In the description of the present invention, it should be understood that the orientation or position relationship indicated by the terms "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial" and "circumferential" and the like, is based on the orientation or position relationship shown in the accompanying drawings, which is only for the convenience of describing the present invention and simplifying the description, and does not indicate or imply that the referred device or element must have a specific orientation, and be constructed and operated in a specific orientation, so it cannot be understood as a limitation of the present invention.

In addition, the terms "first" and "second" are only used for purpose of description, and cannot be understood as indicating or implying relative importance or implicitly indicating the number of indicated technical features. Therefore, the feature defined as "first" or "second" may explicitly or implicitly include at least one such feature. In the description of the present invention, "a plurality of" means at least two, such as two, three, etc., unless otherwise specifically defined.

In the present invention, unless otherwise expressly defined, terms such as "install/mount", "interconnect", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements, unless otherwise specifically defined. For those skilled in the art, the specific meaning of the above terms in the present invention can be understood according to the specific situations.

In the present invention, unless otherwise expressly defined, the first feature "below", "under", "on bottom of", "above", "on", or "on top of" a second feature may include an embodiment in which the first feature is in direct contact with the second feature, or the first feature is in indirect contact with the second feature through an intermediate media. And, the first feature "above", "on", or "on top of" a second feature may include an embodiment in which the first feature is right or obliquely "above", "on", or "on top of" the second feature, or just means that the first feature is at a height higher than that of the second feature. A first feature "below", "under", or "on bottom of" a second feature may include an embodiment in which the first feature is right or obliquely "below", "under", or "on bottom of" the second feature, or just means that the first feature is at a height lower than that of the second feature.

In the description of the present invention, terms such as "an embodiment", "some embodiments", "an example", "a specific example" or "some examples" means that a particular feature, structure, material, or characteristic described in connection with the embodiment or example is included in at least one embodiment or example of the present invention. Thus, the appearances of these terms in various places throughout this specification are not necessarily referring to the same embodiment or example of the present invention. Furthermore, the particular features, structures, materials, or characteristics may be combined in any suitable manner in one or more embodiments or examples. In addition, without contradiction, those skilled in the art may combine and unite different embodiments or examples or features of the different embodiments or examples described in this specification.

## Claims

1. A speed reducer, comprising:
a housing (1) defining a chamber (101) and an oil passage;
a partition plate (2) arranged in the housing (1) to separate the chamber (101) into a gear chamber (111) and an oil chamber (112); and
a reduction assembly arranged in the gear chamber (111), the oil passage having an inlet in communication with the oil chamber (112) and an outlet in communication with the gear chamber (111), the outlet of the oil passage facing towards the reduction assembly to lubricate the reduction assembly,
**characterized by** further comprising:
an oil scavenge pump (6) arranged in the oil chamber (112), wherein the housing (1) further defines an oil collection chamber (113), the partition plate (2) defines an oil discharge port (21), and the oil collection chamber (113) has an inlet in communication with the oil discharge port (21) and an outlet in communication with the oil scavenge pump (6).

2. The speed reducer according to claim 1, wherein the gear chamber (111) is located above the oil chamber (112).

3. The speed reducer according to claim 1 or 2, wherein the housing (1) comprises two detachable sub-housings, each of the two sub-housings defines a groove, and the grooves in the two sub-housings enclose the oil passage.

4. The speed reducer according to claim 1, wherein the outlet of each of the plurality of branch oil passages defines a flow limiting hole, and the flow limiting holes of the plurality of branch oil passages have different sizes.

5. The speed reducer according to claim 1 or 4, wherein
the input component (3) comprises an input shaft (31) and two input bearings (32), the two input bearings (32) being sleeved on the input shaft (31) and respectively located at two ends of the input shaft (31); and
the plurality of branch oil passages comprises a first branch (9), the first branch (9) having an outlet facing towards the two input bearings (32).

6. The speed reducer according to claim 5, wherein
the first branch (9) located at a first end of the input shaft (31) sprays the lubrication oil towards the input bearing (32) located at the first end of the input shaft (31), and
the first branch (9) located at a second end of the input shaft (31) sprays the lubrication oil towards the input bearing (32) located at the second end of the input shaft (31).

7. The speed reducer according to any one of claims 1 to 6, wherein
the transmission component (4) comprises a transmission shaft (41), a first transmission gear (42) and two transmission bearings (43); the two transmission bearings (43) and the first transmission gear (42) being sleeved on the transmission shaft (41), the two transmission bearings (43) being respectively located at two ends of the transmission shaft (41), and the first transmission gear (42) being located between the two transmission bearings (43);
the input component (3) comprises an input gear (33), and the input gear (33) is engaged with the first transmission gear (42); and
the plurality of branch oil passages further comprises a second branch (10) and a third branch (11), the second branch (10) having an outlet facing towards the input gear (33), and the third branch (11) having an outlet facing towards the two transmission bearings (43).

8. The speed reducer according to claim 7, wherein the transmission shaft (41) and the input shaft (31) are arranged in parallel.

9. The speed reducer according to any one of claims 1 to 8, wherein the output component (5) comprises an output shaft (51), an output gear (52) and two output bearings (53); the two output bearings (53) and the output gear (52) are sleeved on the output shaft (51), the two output bearings (53) are respectively located at two ends of the output shaft (51), and the output gear (52) is located between the two output bearings (53); the transmission component (4) further comprises an second transmission gear (44), and the output gear (52) is engaged with the second transmission gear (44); and
the plurality of branch oil passages further comprises a fourth branch (12) and a fifth branch (13), the fourth branch (12) has an outlet facing towards the two output bearings (53), and the fifth branch (13) has an outlet facing towards the output gear (52).

10. The speed reducer according to any one of claims 1 to 9, further comprising:
an oil supply pump, an oil cooler and a filter connected in sequence, wherein the oil supply pump has an outlet in communication with the main oil passage (8) and an inlet in communication with the oil chamber (112).

11. The speed reducer according to any of claims 1 to 10, further comprising:
a ventilation plug (7) connected to the housing (1), wherein the ventilation plug (7) is located in the oil chamber (112), and the ventilation plug (7) has an installation height greater than a liquid level height inside the oil chamber (112).

12. A powertrain, comprising a speed reducer according to any one of claims 1 to 11.

13. A vehicle, comprising a powertrain according to claim 12 or a speed reducer according to any one of claims 1 to 11.

## Patentansprüche

1. Ein Reduktionsgetriebe, das folgende Merkmale aufweist:
ein Gehäuse (1), das eine Kammer (101) und einen Öldurchgang definiert;
eine Trennplatte (2), die in dem Gehäuse (1) angeordnet ist, um die Kammer (101) in eine Getriebekammer (111) und eine Ölkammer (112) zu trennen; und
eine Reduktionsanordnung, die in der Getriebekammer (111) angeordnet ist, wobei der Öldurchgang einen Einlass in Verbindung mit der Ölkammer (112) und einen Auslass in Verbindung mit der Getriebekammer (111) aufweist, wobei der Auslass des Öldurchgangs der Reduktionsanordnung zugewandt ist, um die Reduktionsanordnung zu schmieren,
**dadurch gekennzeichnet, dass** dasselbe ferner folgendes Merkmal aufweist:
eine Ölspülpumpe (6), die in der Ölkammer (112) angeordnet ist, wobei das Gehäuse (1) ferner eine Ölsammelkammer (113) definiert, die Trennplatte (2) eine Ölauslassöffnung (21) definiert und die Ölsammelkammer (113) einen Einlass in Verbindung mit der Ölauslassöffnung (21) und einen Auslass in Verbindung mit der Ölspülpumpe (6) aufweist.

2. Das Reduktionsgetriebe gemäß Anspruch 1, bei dem sich die Getriebekammer (111) über der Ölkammer (112) befindet.

3. Das Reduktionsgetriebe gemäß Anspruch 1 oder 2, bei dem das Gehäuse (1) zwei abnehmbare Untergehäuse aufweist, jedes der zwei Untergehäuse eine Rille definiert und die Rillen in den zwei Untergehäusen den Öldurchgang umschließen.

4. Das Reduktionsgetriebe gemäß Anspruch 1, bei dem der Auslass von jedem der Mehrzahl von Verzweigungsöldurchgängen ein Flussbegrenzungsloch definiert und die Flussbegrenzungslöcher der Mehrzahl von Verzweigungsöldurchgängen unterschiedliche Größen aufweisen.

5. Das Reduktionsgetriebe gemäß Anspruch 1 oder 4, bei dem
die Eingangskomponente (3) eine Eingangswelle (31) und zwei Eingangslager (32) aufweist, wobei die zwei Eingangslager (32) auf die Eingangswelle (31) geschoben sind und sich jeweils an zwei Enden der Eingangswelle (31) befinden; und
die Mehrzahl von Verzweigungsöldurchgängen eine erste Verzweigung (9) aufweist, wobei die erste Verzweigung (9) einen Auslass aufweist, der den zwei Eingangslagern (32) zugewandt ist.

6. Das Reduktionsgetriebe gemäß Anspruch 5, bei dem
die erste Verzweigung (9), die sich an einem ersten Ende der Eingangswelle (31) befindet, das Schmieröl in Richtung des Eingangslagers (32) sprüht, das sich an dem ersten Ende der Eingangswelle (31) befindet, und
die erste Verzweigung (9), die sich an einem zweiten Ende der Eingangswelle (31) befindet, das Schmieröl in Richtung des Eingangslagers (32) sprüht, das sich an dem zweiten Ende der Eingangswelle (31) befindet.

7. Das Reduktionsgetriebe gemäß einem der Ansprüche 1 bis 6, bei dem
die Übersetzungskomponente (4) eine Übersetzungswelle (41), ein erstes Übersetzungszahnrad (42) und zwei Übersetzungslager (43) aufweist; wobei die zwei Übersetzungslager (43) und das erste Übersetzungszahnrad (42) auf die Übersetzungswelle (41) geschoben sind, wobei sich die zwei Übersetzungslager (43) jeweils an zwei Enden der Übersetzungswelle (41) befinden und sich das erste Übersetzungszahnrad (42) zwischen den zwei Übersetzungslagern (43) befindet;
die Eingangskomponente (3) ein Eingangszahnrad (33) aufweist und das Eingangszahnrad (33) mit dem ersten Übersetzungszahnrad (42) in Eingriff steht; und
die Mehrzahl von Verzweigungsöldurchgängen ferner eine zweite Verzweigung (10) und eine dritte Verzweigung (11) aufweist, wobei die zweite Verzweigung (10) einen Auslass aufweist, der dem Eingangszahnrad (33) zugewandt ist, und die dritte Verzweigung (11) einen Auslass aufweist, der den zwei Übersetzungslagern (43) zugewandt ist.

8. Das Reduktionsgetriebe gemäß Anspruch 7, bei dem die Übersetzungswelle (41) und die Eingangswelle (31) parallel angeordnet sind.

9. Das Reduktionsgetriebe gemäß einem der Ansprüche 1 bis 8, bei dem die Ausgangskomponente (5) eine Ausgangswelle (51), ein Ausgangszahnrad (52) und zwei Ausgangslager (53) aufweist; wobei die zwei Ausgangslager (53) und das Ausgangszahnrad (52) auf die Ausgangswelle (51) geschoben sind, sich die zwei Ausgangslager (53) jeweils an zwei Enden der Ausgangswelle (51) befinden und sich das Ausgangszahnrad (52) zwischen den zwei Ausgangslagern (53) befindet; die Übersetzungskomponente (4) ferner ein zweites Übersetzungszahnrad (44) aufweist und das Ausgangszahnrad (52) mit dem zweiten Übersetzungszahnrad (44) in Eingriff steht; und
die Mehrzahl von Verzweigungsöldurchgängen ferner eine vierte Verzweigung (12) und eine fünfte Verzweigung (13) aufweist, wobei die vierte Verzweigung (12) einen Auslass aufweist, der den zwei Ausgangslagern (53) zugewandt ist, und die fünfte Verzweigung (13) einen Auslass aufweist, der dem Ausgangszahnrad (52) zugewandt ist.

10. Das Reduktionsgetriebe gemäß einem der Ansprüche 1 bis 9, das ferner folgende Merkmale aufweist:
eine Ölzufuhrpumpe, einen Ölkühler und ein Filter, die der Reihe nach verbunden sind, wobei die Ölzufuhrpumpe einen Auslass in Verbindung mit dem Hauptöldurchgang (8) und einen Einlass in Verbindung mit der Ölkammer (112) aufweist.

11. Das Reduktionsgetriebe gemäß einem der Ansprüche 1 bis 10, das ferner folgende Merkmale aufweist:
einen Entlüftungsstopfen (7), der mit dem Gehäuse (1) verbunden ist, wobei sich der Entlüftungsstopfen (7) in der Ölkammer (112) befindet und der Entlüftungsstopfen (7) eine Einbauhöhe aufweist, die größer als eine Flüssigkeitspegelhöhe innerhalb der Ölkammer (112) ist.

12. Ein Antriebsstrang, der ein Reduktionsgetriebe gemäß einem der Ansprüche 1 bis 11 aufweist.

13. Ein Fahrzeug, das einen Antriebsstrang gemäß Anspruch 12 oder ein Reduktionsgetriebe gemäß einem der Ansprüche 1 bis 11 aufweist.

## Revendications

1. Réducteur de vitesse, comprenant :
un boîtier (1) définissant une chambre (101) et un conduit d'huile ;
une plaque de séparation (2) disposée dans le boîtier (1) afin de séparer la chambre (101) en une chambre d'engrenages (111) et une chambre d'huile (112) ; et
un ensemble de réduction disposé dans la chambre d'engrenages (111), le conduit d'huile présentant une entrée en communication avec la chambre d'huile (112) et une sortie en communication avec la chambre d'engrenages (111), la sortie du conduit d'huile faisant face à l'ensemble de réduction afin de lubrifier l'ensemble de réduction,
**caractérisé en ce qu'**il comprend en outre :
une pompe de récupération d'huile (6) disposée dans la chambre d'huile (112), dans lequel le boîtier (1) définit en outre une chambre de collecte d'huile (113), la plaque de séparation (2) définit un orifice d'évacuation d'huile (21), et la chambre de collecte d'huile (113) présente une entrée en communication avec l'orifice d'évacuation d'huile (21) et une sortie en communication avec la pompe de récupération d'huile (6).

2. Réducteur de vitesse selon la revendication 1, dans lequel la chambre d'engrenages (111) est située au-dessus de la chambre d'huile (112).

3. Réducteur de vitesse selon la revendication 1 ou 2, dans lequel le boîtier (1) comprend deux sous-boîtiers amovibles, chacun des deux sous-boîtiers définit une rainure, et les rainures dans les deux sous-boîtiers entourent le conduit d'huile.

4. Réducteur de vitesse selon la revendication 1, dans lequel la sortie de chacun de la pluralité des conduits d'huile de dérivation définit un orifice de limitation de débit, et les orifices de limitation de débit de la pluralité des conduits d'huile de dérivation présentent des tailles différentes.

5. Réducteur de vitesse selon la revendication 1 ou 4, dans lequel
le composant d'entrée (3) comprend un arbre d'entrée (31) et deux paliers d'entrée (32), les deux paliers d'entrée (32) étant emmanchés sur l'arbre d'entrée (31) et situés respectivement aux deux extrémités de l'arbre d'entrée (31) ; et
la pluralité des conduits d'huile de dérivation comprend une première dérivation (9), la première dérivation (9) présentant une sortie faisant face aux deux paliers d'entrée (32).

6. Réducteur de vitesse selon la revendication 5, dans lequel
la première dérivation (9), située à une première extrémité de l'arbre d'entrée (31), projette l'huile de lubrification vers le palier d'entrée (32) situé au niveau de la première extrémité de l'arbre d'entrée (31), et
la première dérivation (9), située à une deuxième extrémité de l'arbre d'entrée (31), projette l'huile de lubrification vers le palier d'entrée (32) situé au niveau de la deuxième extrémité de l'arbre d'entrée (31).

7. Réducteur de vitesse selon l'une quelconque des revendications 1 à 6, dans lequel
le composant de transmission (4) comprend un arbre de transmission (41), un premier pignon de transmission (42) et deux paliers de transmission (43) ; les deux paliers de transmission (43) et le premier pignon de transmission (42) étant emmanchés sur l'arbre de transmission (41), les deux paliers de transmission (43) étant respectivement situés aux deux extrémités de l'arbre de transmission (41), et le premier pignon de transmission (42) étant situé entre les deux paliers de transmission (43) ;
le composant d'entrée (3) comprend un pignon d'entrée (33), et le pignon d'entrée (33) est en prise avec le premier pignon de transmission (42) ; et
la pluralité de conduits d'huile de dérivation comprend en outre une deuxième dérivation (10) et une troisième dérivation (11), la deuxième dérivation (10) présentant une sortie faisant face à l'engrenage d'entrée (33), et la troisième dérivation (11) présentant une sortie face aux deux paliers de transmission (43).

8. Réducteur de vitesse selon la revendication 7, dans lequel l'arbre de transmission (41) et l'arbre d'entrée (31) sont agencés en parallèle.

9. Réducteur de vitesse selon l'une quelconque des revendications 1 à 8, dans lequel le composant de sortie (5) comprend un arbre de sortie (51), un pignon de sortie (52) et deux paliers de sortie (53) ; les deux paliers de sortie (53) et le pignon de sortie (52) sont emmanchés sur l'arbre de sortie (51), les deux paliers de sortie (53) sont respectivement situés aux deux extrémités de l'arbre de sortie (51), et le pignon de sortie (52) est situé entre les deux paliers de sortie (53) ; le composant de transmission (4) comprend en outre un deuxième pignon de transmission (44), et le pignon de sortie (52) est en prise avec le deuxième pignon de transmission (44) ; et
la pluralité de conduits d'huile de dérivation comprend en outre une quatrième de dérivation (12) et une cinquième de dérivation (13) ; la quatrième de dérivation (12) présente une sortie faisant face aux deux paliers de sortie (53), et la cinquième de dérivation (13) présente une sortie orientée vers le pignon de sortie (52).

10. Réducteur de vitesse selon l'une quelconque des revendications 1 à 9, comprenant en outre :
une pompe d'alimentation en huile, un refroidisseur d'huile et un filtre connectés en série, dans lequel la pompe d'alimentation en huile présente une sortie en communication avec le conduit d'huile principal (8) et une entrée en communication avec la chambre d'huile (112).

11. Réducteur de vitesse selon l'une quelconque des revendications 1 à 10, comprenant en outre :
un bouchon de purge (7) connecté au boîtier (1), dans lequel le bouchon de purge (7) est situé dans la chambre d'huile (112) et le bouchon de purge (7) présente une hauteur d'installation supérieure à un niveau de liquide à l'intérieur de la chambre d'huile (112).

12. Groupe motopropulseur, comprenant un réducteur de vitesse selon l'une quelconque des revendications 1 à 11.

13. Véhicule comprenant un groupe motopropulseur selon la revendication 12 ou un réducteur de vitesse selon l'une quelconque des revendications 1 à 11.
